Europäisches Patentamt

European Patent Office

Office européen des brevets

(19)

(11) **EP 0 764 402 B1**

(12) **EUROPEAN PATENT SPECIFICATION**

(45) Date of publication and mention
of the grant of the patent:
**19.12.2001   Bulletin 2001/51**

(51) Int Cl.⁷: $A01J\ 5/01$, $G01F\ 1/00$

(21) Application number: **96202599.5**

(22) Date of filing: **18.09.1996**

(54) **A method of determining the quantity of milk collected during a milking turn**

Verfahren zur Bestimmung der während des Melkens abgegebenen Milchmengen

Méthode de détermination de la quantité de lait recueillie pendant une traite

(84) Designated Contracting States:
**DE FR GB NL SE**

(30) Priority:  **21.09.1995  NL 1001257**

(43) Date of publication of application:
**26.03.1997   Bulletin 1997/13**

(73) Proprietor: **MAASLAND N.V.**
**3155 PD Maasland (NL)**

(72) Inventor: **Van den Berg, Karel**
**2971 BR Bleskensgraaf (NL)**

(74) Representative: **Corten, Maurice Jean F.M.**
**Octrooibureau Van der Lely N.V. Weverskade 10**
**3155 PD Maasland (NL)**

(56) References cited:
**EP-A- 0 057 267        EP-A- 0 081 049**
**EP-A- 0 510 779**

EP 0 764 402 B1

## Description

The invention relates to a method of determining the quantity of milk M collected during a milking turn, whereby, by means of a computer and a milkmeter, the quantity of milk M can be established at various points of time.

A suchlike method is known.

In the known method, in general, the milkmeter is partially filled with milk at the end of the milking turn. However, in some cases it might occur that the livestock comprises several high productive animals, which give so much milk during a milking turn that the capacity of the milkmeter is too small, so that milk remains in the supply line to the milkmeter. It will be obvious that this is undesirable. A possible solution for this problem is the mounting of a bigger milkmeter; however, bigger milkmeters are more expensive and take relatively much room in the milking implement. Also the cleaning of a bigger milkmeter would require more attention and more cleaning water than the cleaning of a small one.

EP-A-0 081 049 discloses a milk quantity measuring device wherein milk is discharged from a measuring chamber in defined quantities during milking. The calculation of the total quantity of milk is based on the measurement of the length of time intervals corresponding to filling cycles. The determination of the duration of a filling cycle is relatively inaccurate. The device is therefore not very accurate.

The invention aims at obtaining a method, in which the above-mentioned disadvantages do not occur, or are at least limited to a considerable extent.

In accordance with the invention, this is achieved by means of a method comprising the steps according to the characterizing part of claim 1.

By pumping away a quantity of milk during the interval of time ($t_2 - t_1$), a relatively small milk glass will be sufficient, also for high productive animals.

In accordance with the method according to the invention, the quantity measurements take place prior to the discharge of the milk from the milk glass.

In accordance with a further method according to the invention, the quantity measurements can also take place after the discharge of the milk from the milk glass has stopped. Also by means of these quantity measurements slope can be determined, by means of which B can be calculated as described before.

The invention further relates to an implement for applying a method as described above, characterized by the features of the characterizing part of claim 4.

In order to discharge the milk from the milk container in an accelerated manner, according to a further inventive feature the implement comprises a discharge line in which a computer-controlled pump is included.

In a first embodiment, according to an inventive feature, the quantity meter comprises a pressure meter measuring the difference in pressure above the milk column and in the lower part thereof. The static difference in pressure is a measure for the quantity of milk present in the milk container. According to again an other inventive feature, the quantity meter comprises a float including a magnet, which moves with the milk column along a conductor, and whereby the position of the float relative to the conductor is electronically readable by means of a probe.

According to again an other inventive feature, the quantity meter comprises an ultrasonic or an optic sensor, such as a laser sensor, by means of which the milk level in the milk container, and on the basis thereof the quantity of milk therein, are determined.

According to a further inventive feature, the implement comprises a milking robot for automatically connecting teat cups to the teats of an animal.

For a better understanding of the invention and to show how the same may be carried into effect, reference will now be made, by way of example, to an embodiment as shown in the accompanying drawings 1 to 3.

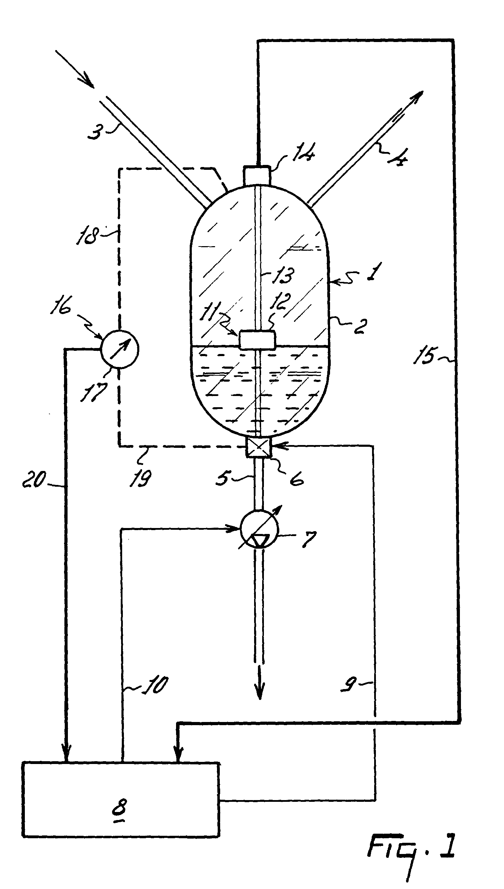

Figure 1 shows a milkmeter 1 comprising a milk glass 2, in which the milk yielded during a milking turn is collected. At the upper side of the milk glass 2 there is connected a milk supply line 3 and a vacuum line 4. At the lower side of the milk glass 2 there is a milk discharge line, in which a computer-controlled valve 6 and a controllable, computer-controlled pump 7 are included. The opening and closing of the computer-controlled valve 6 and the starting up and switching off of the computer-controlled pump 7 is effected by means of the computer 8, which is capable of supplying a signal to the valve 6 and the pump 7 via the lines 9, 10 respectively.

The milkmeter 1 additionally comprises a quantity meter 11, by means of which the quantity of milk in the milk glass 2 can be determined. The quantity meter 11 includes a float 12 which moves with the milk column along a conductor 13. The conductor 13 is disposed over the entire length of the milk glass 2 and centrally therein. The float 12 includes a (non-shown) magnet which is electronically readable by means of a probe 14, disposed at the upper side of the milk glass 2. Via a line 15 the signal supplied by the probe 14 is read out by the computer 8. The position of the float 12 relative to the conductor 13 is a measure for the quantity of milk present in the milk glass 2 at a certain point of time.

In Figure 1 there is furthermore indicated an alternative quantity meter 16. The alternative quantity meter 16 comprises a pressure meter 17 including a first line 18, debouching into the upper part of the milk glass 2, and a second line 19, debouching into the lower part of the milk glass 2, near the computer-controlled valve 6. By means of the pressure meter 17, the difference in pressure above the milk column and in the lower part thereof is measured. By means of a line 20 this signal is supplied to the computer 8. The static difference in pressure is a measure for the quantity of milk present in the milk glass 2 at a certain point of time.

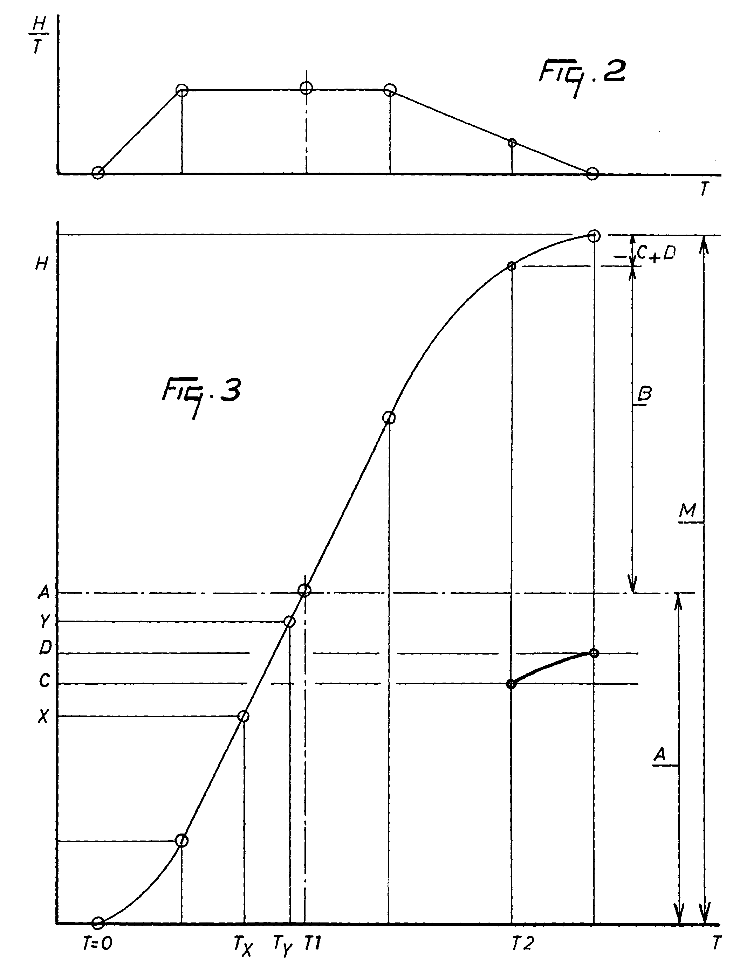

The function of the milkmeter 1 will further be explained with the aid of Figures 2 and 3.

Figure 2 shows a much simplified reproduction of a diagram of the milk flow (H/T) during a milking turn. The first oblique part of the diagram shows the milk stream when the milk supply of the animal is started; the horizontal part of the diagram indicates a more or less constant milk supply of the animal and the last oblique part of the diagram represents a slow decrease of the milk supply during the milking out of the animal. By integrating the diagram of Figure 2 in time and by then setting same out against time, the diagram according to Figure 3 is obtained, in which the quantity of milk is set out in time. On the basis of Figure 3, the method of determining the quantity of milk M during a milking turn will further be explained.

From the point of time t = 0, the milking turn starts and milk is collected in the milk glass 2. The computer 8 is preprogrammed in such a way that, when the milk glass 2 contains a quantity of milk A, which can be ascertained by means of the quantity meter 11, 16, the computer 8 supplies a signal to the valve 6 and the pump 7 via the lines 9, 10 respectively, so that the valve 6 and the pump 7 are put into operation. During an interval of time $(t_2 - t_1)$ preprogrammed in the computer 8, milk is pumped out of the milk glass 2. Meanwhile, the flow of milk into the milk glass 2 via the milk supply line 3 is still possible. After the interval of time $(t_2 - t_1)$ has elapsed, the computer-controlled valve 6 is closed and the computer-controlled pump 7 is put out of operation. At the same time the quantity of milk C then present in the milk glass 2 is determined and this data is stored in the computer 8. After it has been ascertained by means of a (non-shown) flow-sensor that there is no longer transported milk to the milk glass 2 via the milk supply line 3, the quantity of milk D in the milk glass 2 is measured and this data is stored in the computer 8. Then the milk yield M is calculated in the computer 8 according to: M = A + B - C + D.

In this formula only B is unknown. However, B can be calculated on the basis of $(t_2 - t_1)$ and at least two quantity measurements in the milkmeter 1 prior to the discharge of the milk from the milkmeter 1 or thereafter and on the basis of the open interval $(t_2 - t_1)$ and the points of time when these quantity measurements have been carried out, which can be recorded by means of the computer 8. In the diagram of Figure 3, these two quantity measurements are indicated by x and y and the points of time when they have been carried out by $t_x$, $t_y$. The quantity measurements x and y and the points of time $t_x$ and $t_y$ are already recorded in the computer 8 before the quantity of milk A is collected in the milk glass 2. The quantity measurements are preferably carried out in the milk glass 2 when the quantity of milk A approaches, in order better to be able to calculate B. On the basis of the quantity measurements x and y and the points of time $t_x$ and $t_y$, there is determined in that region a slope of the diagram, see Figure 3. On the basis of the slope and the interval of time $(t_2 - t_1)$, the unknown quantity of milk B can be calculated according to the formula:

$$B = RC(slope).(t_2 - t_1).$$

By introducing B in the formula M = A + B - C + D, the total milk yield M over a milking turn can be calculated.

In an alternative embodiment, a slope can also be calculated by means of at least two quantity measurements in the section between C and D in the diagram of Figure 3.

**Claims**

1. A method of determining the quantity of milk M collected during a milking turn, whereby, by means of a computer and a milkmeter, the quantity of milk M can be established at various points of time, **characterized in that** the method comprises the following steps:

   1) the milk is discharged from the milkmeter, when a prefixed quantity of milk A has been collected therein;
   2) the discharge of milk from the milkmeter is stopped after a fixed time $(t_2 - t_1)$ has elapsed and the quantity of milk C in the milkmeter is then measured:
   3) after it has been ascertained that the milk flow to the milkmeter has ended, the quantity of milk D in the milkmeter is measured;
   4) in the computer the milk yield M is calculated according to:

   $$M = A + B - C + D,$$

   in which B is determined as (slope).$(t_2 - t_1)$, wherein (slope) is determined on the basis of at least two quantity measurements in the milkmeter prior to the discharge of the milk from the milkmeter or thereafter and outside the open interval $(t_2 - t_1)$ and the points of time at which these quantity measurements have been carried out.

2. A method as claimed in claim 1, **characterized in that** the quantity measurements in step 4) take place prior to the discharge of the milk from the milk glass.

3. A method as claimed in claim 1, **characterized in that** the quantity measurements in step 4) take place after the discharge of the milk from the milk glass has stopped.

4. An implement for applying a method as claimed in any one of claims 1 to 3, **characterized in that** the implement comprises a milk container, such as a milkmeter or a milk glass, (2) including a supply line (3) and a discharge line (5) for the milk, and that a computer-controlled valve (6) is included in the discharge line (5) and a quantity meter (11, 16) is included in the milk container (2), the implement further being provided with a flow sensor for ascertaining that the milk flow to the milkmeter (2) has ended and with a computer (8).

5. An implement as claimed in claim 4, **characterized in that** there is included a computer-controlled pump (7) in the discharge line.

6. An implement as claimed in claim 4, **characterized in that** the quantity meter (16) comprises a pressure meter measuring the difference in pressure above the milk column and in the lower part thereof.

7. An implement as claimed in claim 4, **characterized in that** the quantity meter (11, 16) comprises a float (12) including a magnet, which moves with the milk column along a conductor (13), and whereby the position of the float (12) relative to the conductor (13) is electronically readable by means of a probe (14).

8. An implement as claimed in claim 4, **characterized in that** the quantity meter comprises an ultrasonic or an optic sensor, such as a laser sensor, by means of which the milk level in the milk container, and on the basis thereof the quantity of milk therein, are determined.

9. An implement as claimed in any one of claims 4 to 8, **characterized in that** the implement comprises a milking robot for automatically connecting teat cups to the teats of an animal.

**Patentansprüche**

1. Verfahren zur Ermittlung der während eines Melkvorganges gewonnenen Milchmenge M, wobei mittels eines Computers und eines Milchmessers die Milchmenge M zu verschiedenen Zeitpunkten ermittelt werden kann, **dadurch gekennzeichnet, daß** das Verfahren die folgenden Verfahrensschritte umfaßt:

    1) Die Milch wird aus dem Milchmesser abgeleitet, wenn in diesem eine vorgegebene Milchmenge A gesammelt worden ist;

    2) das Ableiten von Milch aus dem Milchmesser wird nach Ablauf eines festgelegten Zeitraumes $(t_2 - t_1)$ beendet, und sodann wird die Milchmenge C in dem Milchmesser gemessen:

    3) Nachdem festgestellt worden ist, daß der Milchfluß zu dem Milchmesser beendet ist, wird die Milchmenge D in dem Milchmesser gemessen;

    4) in dem Computer wird die Milchleistung M wie folgt berechnet:

$$M = A + B - C + D,$$

wobei B ermittelt wird durch (Anstieg) $(t_2 - t_1)$, wobei der (Anstieg) ermittelt wird auf der Basis von mindestens zwei Mengenmessungen im Milchmesser vor dem Ableiten der Milch aus dem Milchmesser oder danach und außerhalb des offenen Intervalls $(t_2 - t_1)$ und der Zeitpunkte, zu denen diese Mengenmessungen durchgeführt wurden.

2. Verfahren nach Anspruch 1, **dadurch gekennzeichnet, daß** die Mengenmessungen in Verfahrensschritt 4) vor der Ableitung der Milch aus dem Milchsammelglas durchgeführt werden.

3. Verfahren nach Anspruch 1, **dadurch gekennzeichnet, daß** die Mengenmessungen in Verfahrensschritt 4) durchgeführt werden, nachdem die Ableitung der Milch aus dem Milchsammelglas beendet ist.

4. Vorrichtung zur Durchführung eines Verfahrens nach einem der Ansprüche 1 bis 3, **dadurch gekennzeichnet, daß** die Vorrichtung einen Milchbehälter, wie z. B. einen Milchmesser oder ein Milchsammelglas (2) mit einer Zuführleitung (3) und einer Abflußleitung (5) für die Milch umfaßt, und daß ein rechnergesteuertes Ventil (6) in der Abflußleitung (5) und ein Mengenmesser (11, 16) in dem Milchbehälter (2) angeordnet sind, wobei die Vorrichtung ferner einen Strömungssensor zur Feststellung der Beendigung des Milchflusses zu dem Milchmesser (2) und einen Computer (8) aufweist.

5. Vorrichtung nach Anspruch 4, **dadurch gekennzeichnet, daß** in der Abflußleitung eine rechnergesteuerte Pumpe (7) angeordnet ist.

6. Vorrichtung nach Anspruch 4, **dadurch gekennzeichnet, daß** der Mengenmesser (16) einen Druckmesser umfaßt, der die Differenz des Druckes über der Milchsäule und in deren unterem Teil mißt.

**7.** Vorrichtung nach Anspruch 4, **dadurch gekennzeichnet, daß** der Mengenmesser (11, 16) einen einen Magneten enthaltenden Schwimmer (12) umfaßt, der sich mit der Milchsäule entlang einer Leitung (13) bewegt, und wobei die Position des Schwimmers (12) relativ zu der Leitung (13) mittels eines Meßfühlers (14) elektronisch lesbar ist.

**8.** Vorrichtung nach Anspruch 4, **dadurch gekennzeichnet, daß** der Mengenmesser einen Ultraschall- oder einen optischen Sensor, wie z. B. einen Lasersensor, umfaßt, mittels dessen der Milchpegel in dem Milchbehälter und darauf basierend die in ihm enthaltene Milchmenge ermittelt werden.

**9.** Vorrichtung nach einem der Ansprüche 4 bis 8, **dadurch gekennzeichnet, daß** die Vorrichtung einen Melkroboter zum automatischen Anschließen von Zitzenbechern an die Zitzen eines Tieres umfaßt.

**Revendications**

**1.** Procédé de détermination de la quantité de lait M recueillie pendant une traite, de telle manière que, au moyen d'un ordinateur et d'un compteur de lait, la quantité de lait M puisse être déterminée à différents temps, **caractérisé en ce que** le procédé comprend les étapes suivantes :

   1) le lait est déchargé depuis le compteur de lait, quand une quantité prédéterminée de lait A a été recueillie dans celui-ci ;

   2) la décharge du lait depuis le compteur de lait est arrêtée après qu'un temps fixé ($t_2 - t_1$) se soit écoulé et la quantité de lait C dans le compteur de lait est ensuite mesurée ;

   3) une fois qu'il a été déterminé que l'écoulement de lait vers le compteur de lait est arrêté, la quantité de lait D dans le compteur de lait est mesurée ;

   4) dans l'ordinateur, le rendement en lait est calculé selon :

   $$M = A + B + C + D,$$

   où B est déterminé par (pente).($t_2 - t_1$), où (pente) est déterminé à partir d'au moins deux mesures de quantité dans le compteur de lait avant la décharge du lait depuis le compteur de lait ou après celle-ci et en dehors de l'intervalle ouvert ($t_2 - t_1$) et des temps auxquels ces mesures de quantité ont été effectuées.

**2.** Procédé selon la revendication 1, **caractérisé en ce que** les mesures de quantité dans l'étape 4) sont effectuées avant la décharge du lait depuis le verre à lait.

**3.** Procédé selon la revendication 1, **caractérisé en ce que** les mesures de quantité dans l'étape 4) sont effectuées une fois que la décharge du lait depuis le verre à lait est arrêtée.

**4.** Installation pour appliquer un procédé selon l'une quelconque des revendications 1 à 3, **caractérisée en ce que** l'installation comprend un conteneur de lait, tel qu'un compteur de lait ou un verre à lait (2), comprenant une voie d'arrivée (3) et une voie de décharge (5) pour le lait, et qu'une vanne commandée par ordinateur (6) est comprise dans la voie de décharge (5) et un compteur de quantité (11, 16) est compris dans le conteneur de lait (2), l'installation comprenant également un capteur d'écoulement pour confirmer que l'écoulement de lait vers le compteur de lait (2) est terminé et un ordinateur (8).

**5.** Installation selon la revendication 4, **caractérisée en ce qu'**une pompe commandée par ordinateur (7) est comprise dans la voie de décharge.

**6.** Installation selon la revendication 4, **caractérisée en ce que** le compteur de quantité (16) comprend un capteur de pression mesurant la différence de pression entre le haut de la colonne de lait et la partie inférieure de celle-ci.

**7.** Installation selon la revendication 4, **caractérisée en ce que** le compteur de quantité (11, 16) comprend un flotteur (12) comprenant un aimant, qui se déplace avec la colonne de lait le long d'un conducteur (13), et de telle manière que la position du flotteur (12) par rapport au conducteur (13) puisse être lue de façon électronique au moyen d'une sonde (14).

**8.** Installation selon la revendication 4, **caractérisée en ce que** le compteur de quantité comprend un capteur à ultrasons ou optique, tel qu'un capteur laser, au moyen duquel le niveau de lait dans le conteneur de lait, et sur la base duquel la quantité de lait dans celui-ci, sont déterminés.

**9.** Installation selon l'une quelconque des revendications 4 à 8, **caractérisée en ce que** l'installation comprend un automate de traite pour connecter automatiquement des gobelets trayeurs aux trayons d'un animal.

FIG. 1

FIG.2

FIG.3